# EUROPÄISCHE PATENTSCHRIFT

(11) **EP 2 354 572 B1**
(45) Veröffentlichungstag und Bekanntmachung des Hinweises auf die Patenterteilung: **02.07.2014**
(21) Anmeldenummer: 10000436.5
(22) Anmeldetag: 18.01.2010
(51) Int. Cl.: F16B 25/00, F16B 33/02

(54) **Gewindeformende Schraube**
Thread moulding screw
Vis autotaraudeuse

(43) Veröffentlichungstag der Anmeldung: 10.08.2011
(73) Patentinhaber: UIP GmbH & Co. KG, 63814 Mainaschaff (DE)
(72) Erfinder: Göttlich, Harald, 30900 Wedemark (DE)
(74) Vertreter: Patentanwälte Westphal, Mussgnug & Partner

(56) Entgegenhaltungen:
- EP-A1- 1 431 591
- GB-A- 2 344 629
- US-A- 5 957 646

## Beschreibung

Die Erfindung betrifft eine gewindeformende Schraube nach dem Oberbegriff des Anspruchs 1.

Bekannte Schrauben dieser Art sind in der EP 0 623 759 B1, der DE 299 17 000 U1, der DE 10 2005 017 596 A1, der DE 202 06 589 U1, der GB 2 344 629 B sowie der EP 1 975 421 B1 offenbart. Derartige Schrauben werden beispielsweise ohne Dübel in eine vorgebohrte Bohrung in Beton, Mauerwerk oder dergleichen Werkstoff eingeschraubt. Dabei schneidet sich ihr Gewindegang In die Wandung der Bohrung ein.

Die EP 1 431 591 A1 offenbart eine gewindeformende Schraube mit mehreren Gewindegängen und Außendurchmessern nach dem Oberbegriff von Anspruch 1.

Der Erfindung liegt die Aufgabe zugrunde, eine gewindeformende Schraube der im Oberbegriff des Anspruchs 1 angegebenen Art alternativ so auszubilden, dass ein einfaches und zuverlässiges Befestigen von Bauteilen an einem festen Verankerungsgrund ohne Verwendung von Dübeln oder anderen Hilfsmitteln möglich ist. Der Erfindung liegt außerdem die Aufgabe zugrunde, eine gewindeformende Schraube nach dem Oberbegriff des Anspruchs 1 so auszubilden, dass ein einfaches und zuverlässiges Befestigen von Bauteilen an einem festen Verankerungsgrund ohne Vorbohren möglich ist.

Diese Aufgabe wird bei einer gewindeformenden Schraube nach dem Oberbegriff des Anspruchs 1 dadurch gelöst, dass nur der erste Gewindegang auf der kogelstumpfartig oder pyramldenstumpfförrnig verjüngten Spitze, vorzugsweise bis zum freien Ende der Spitze, mit gleicher Steigung ausläuft.

Durch eine derart ausgebildete gewindeformende Schraube ist ein einfaches und zuverlässiges Befestigen von Bauteilen an einem festen Verankerungsgrund ohne Verwendung von Dübeln oder anderen Hilfsmitteln möglich. Es hat sich herausgestellt, dass sich das Einschneidverhalten einer solchen erfindungsgemäßen Schraube verbessert, wobei der erste Gewindegang die Schraube in den Verankerungsgrund zieht, ohne dass die folgenden Gewindegänge blockieren. Letztgenannte Gewindegänge lassen sich so leicht in den Verankerungsgrund einschrauben und gewährleisten dann den Halt der Schraube im Verankerungsgrund, selbst wenn der im Außendurchmesser größte erste Gewindegang aufgrund seines größeren Außendurchmessers mal im gegebenenfalls härteren Verankerungsgrund abbrechen sollte.

Der Begriff "fester Verankerungsgrund" ist weit gefasst. Neben Beton, Mauerwerk oder dergleichen Werkstoff wird unter einem festen Verankerungsgrund beispielsweise auch ein bröckeliges Mauerwerksmaterial, weicher Ziegelstein oder ein anderer weicher Stein verstanden. Auch Holz kann einen festen Verankerungsgrund bilden. Bevorzugt ist Gasbeton als fester Verankerungsgrund.

Für bestimmte Einsatzzwecke kann es von Vorteil sein, wenn der Außendurchmesser des zweiten Gewindeganges größer ist als der Außendurchmesser des entgegengesetzt der Setzrichtung dem zweiten Gewindegang folgenden dritten Gewindeganges. Für andere bestimmte Einsatzzwecke kann es von Vorteil sein, wenn der Außendurchmesser des zweiten Gewindeganges im Wesentlichen gleich groß ist wie der Außendurchmesser des entgegengesetzt der Setzrichtung dem zweiten Gewindegang folgenden dritten Gewindeganges. Zwar wird so der erste Gewindegang, also der mit dem größten Außendurchmesser, beim Einschrauben der Schraube in den Verankerungsgrund am meisten belastet und schneidet entsprechend hoch beansprucht in die Wandung der Bohrung ein, jedoch wird auf diese Weise ein Blockieren der Schraube durch leichtes Einschrauben der übrigen Gewindegänge verhindert. Selbst bei einer Beschädigung des Gewindeganges mit dem größten Außendurchmesser wird der Halt der Schraube durch die übrigen Gewindegänge sichergestellt.

Alle Gewindegänge übertragen hierbei Haltekräfte in die Wandung der Bohrung bzw. den Verankerungsgrund, so dass die Kräfte insgesamt besser verteilt in die Wandung der Bohrung übertragen werden.

Es kann von Vorteil sein, wenn der Abstand wenigstens zweier Gewindegänge zueinander unterschiedlich ist.

Es kann von besonderem Vorteil sein, wenn der Abstand des ersten Gewindeganges zum zweiten Gewindegang größer ist als der Abstand des zweiten Gewindeganges zum dritten Gewindegang und vorzugsweise auch größer als der Abstand des dritten Gewindeganges zum ersten Gewindegang.

Es kann zweckmäßig sein, wenn der Abstand des zweiten Gewindeganges zum dritten Gewindegang kleiner ist als der Abstand des dritten Gewindeganges zum ersten Gewindegang.

Insgesamt entstehen durch die wenigstens drei Gewindegänge im Zusammenspiel mit den unterschiedlichen Abständen der Gewindegänge zueinander weniger Spannungen im Verankerungsgrund. Insbesondere bei weichem oder bröckeligem Verankerungsgrund, bevorzugt bei Gasbeton, lässt sich so der Abstand von nebeneinander angeordneten Bohrungen im Verankerungsgrund verringern. Die Anzahl von Bohrungen auf einer gegebenen Flächeneinheit kann also vorteilhaft erhöht werden.

Die unterschiedlichen Abstände der drei Gewindegänge zueinander verbessern im Zusammenspiel mit den unterschiedlichen Außendurchmessern der Gewindegänge die Kraftübertragung von der Schraube auf den Verankerungsgrund.

Der Außendurchmesser eines Gewindeganges wird über den Gewindegrat gemessen. Jeder Gewindegang weist einen gleich bleibenden Außendurchmesser über die Länge des Schaftes auf. Vorzugsweise ist jeder Gewindegang als Spitzgewinde ausgebildet.

Weiterhin kann es vorteilhaft sein; wenn nur der erste Gewindegang auf der kegelstumpfartig oder pyramidenstumpfförmig verjüngten Spitze, vorzugsweise bis zum freien Ende der Spitze, mit gleicher Steigung ausläuft. Dadurch wird ein Einschrauben der Schraube auch in einem nicht vorgebohrten Verankerungsgrund, vorzugsweise aus Holz, ermöglicht. Die Schraube zieht sich hierbei problemlos in den Verankerungsgrund ein. Eine solche Anordnung stellt besonders sicher, dass die übrigen Gewindegänge sich ebenfalls ohne zu blockieren in den Verankerungsgrund einschrauben lassen.

Es kann vorteilhaft sein, wenn die Höhe des ersten Gewindegangs, gemessen im rechten Winkel ausgehend von der Oberfläche des im Wesentlichen zylindrischen Schaftes, im Wesentlichen der Höhe des ersten Gewindegangs, gemessen im rechten Winkel ausgehend von der Oberfläche der Spitze, entspricht.

Als besonders vorteilhaft kann es sein, wenn zwischen dem ersten Gewindegang und dem zweiten Gewindegang eine Erhöhung vorgesehen ist, welche vorzugsweise rechteck- bis halbtrapezförmig ausgebildet ist, wobei sich die Erhöhung parallel und helixförmig zu den Gewindegängen zumindest teilweise über die Länge des Schaftes erstreckt, wobei der Außendurchmesser der Erhöhung kleiner ist als der Außendurchmesser der Gewindegänge.

Weiterhin ist vorgesehen, dass der zweite und der dritte Gewindegang eine Art Gewindeband bilden, das sich helixförmig zumindest teilweise über die Länge des Schaftes erstreckt, wobei die Steigung des Gewindebandes mindestens zwei, vorzugsweise drei Bandbreiten beträgt.

Dies hat sich als günstig für eine hohe Haltekraft der Schraube im festen Verankerungsgrund herausgestellt. Zudem lässt sich die Schraube besonders einfach in einen nicht vorgebohrten Verankerungsgrund, vorzugsweise in Holz einschrauben.

Es kann hierbei von Vorteil sein, wenn der Abstand zwischen dem ersten und dem zweiten Gewindegang und/oder wenn der Abstand zwischen dem dritten und dem ersten Gewindegang jeweils mindestens doppelt, vorzugsweise mindestens dreimal so groß ist wie der Abstand zwischen dem zweiten und dritten Gewindegang.

Eine vorteilhafte Ausgestaltung der Erfindung sieht vor, dass jeder Gewindegang einen im Wesentlichen gleichen Flankenwinkel aufweist.

Als besonders günstig haben sich für die Gewindegänge Flankenwinkel von 8 bis 45°, vorzugsweise von 8 bis 31°, besonders bevorzugt von 16 bis 30° herausgestellt.

Vorzugsweise sind die Außendurchmesser der Gewindegänge derart bemessen, dass sich die Gewindegänge beim Einschrauben in die Wandung der Bohrung oder in den nicht vorgebohrten Verankerungsgrund eingraben und furchen.

Im erst genannten Fall bedeutet das, dass der Durchmesser der Bohrung kleiner als der Außendurchmesser des kleinsten Gewindeganges ist, so dass sich auch der Gewindegang mit dem kleinsten Außendurchmesser in die Wandung der Bohrung einschneidet und zum Halt der Schraube im festen Verankerungsgrund beiträgt.

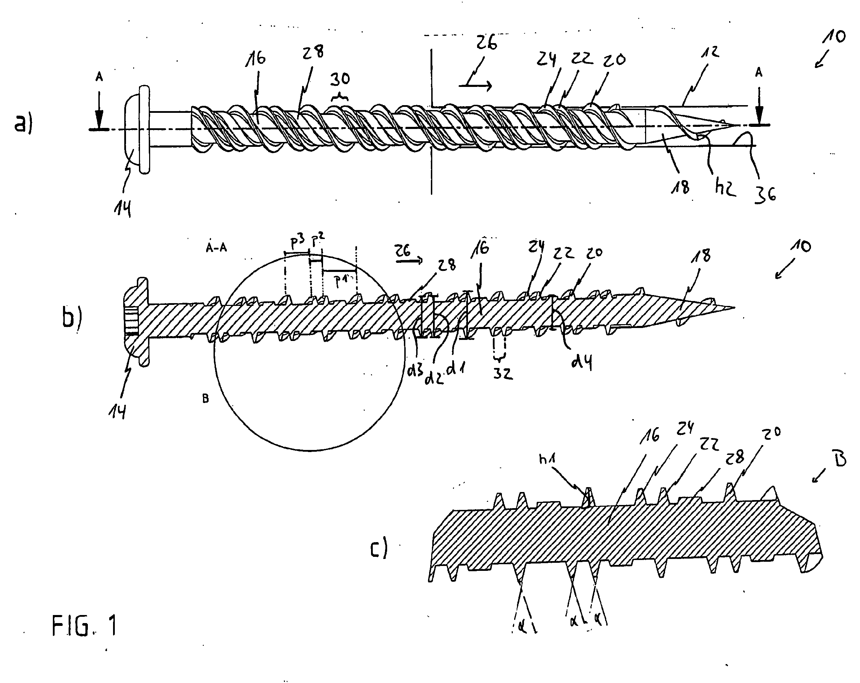

Nachfolgend wird die Erfindung anhand eines Ausführungsbeispiels erläutert, das in der Zeichnung dargestellt ist. In dieser zeigt
- Fig. 1: eine erfindungsgemäße gewindeformende Universalschraube
a) in Seitenansicht
b) in Querschnittsansicht und
c) in Teilansicht (B).

In der Fig. 1 bezeichnen gleiche Bezugszeichen gleiche Bauteile.

Die in Fig. 1 dargestellte, erfindungsgemäße gewindeformende Universalschraube 10 ist zum Einschrauben in eine Bohrung 12 in einen festen Verankerungsgrund oder in einem nicht vorgebohrten Verankerungsgrund, vorzugsweise aus Holz, vorgesehen.

Die Universalschraube 10 wird ohne Verwendung eines Dübels oder sonstigen Hilfsmittels in die Bohrung 12 eingeschraubt. Eignet sich aber auch als so genannte Verbundankerschraube, bei der eine aushärtbare Masse, vorzugsweise Mörtel oder ein Klebstoff, zusätzlich in die Bohrung 12 eingebracht ist.

Die Universalschraube 10 weist eine kegelstumpfförmig verjüngte Spitze 18 an einem vorderen Schraubenende und einen Schraubenkopf 14 an einem hinteren Schraubenende auf. Die kegelstumpfförmig verjüngte Spitze 18 erleichtert das Einführen der Universalschraube 10 in eine Bohrung 12.

Im dargestellten Ausführungsbeispiel ist der Schraubenkopf 14 einer Flachkopfschraube mit Innensechskant. Diese Kopfform bzw. dieses Schraubenmitnahmeprofil ist aber nicht zwingend.

Die Universalschraube 10 weist drei Gewindegänge 20, 22 und 24 auf, die parallel zueinander ausgebildet sind und sich helixförmig über die Länge des Schaftes 16 erstrecken.

Der Außendurchmesser d1 des ersten Gewindeganges 20 ist größer als die Außendurchmesser d2 und d3 der entgegengesetzt der Setzrichtung 26 dem ersten Gewindegang 20 folgenden Gewindegänge 22 und 24.

Der Außendurchmesser d2 des zweiten Gewindeganges 22 entspricht im Wesentlichen dem Außendurchmesser d3 des entgegengesetzt der Setzrichtung 26 dem zweiten Gewindegang 22 folgenden dritten Gewindeganges 24.

Der Abstand p1, p2 und p3 der Gewindegänge 20, 22 und 24 zueinander ist unterschiedlich.

Die Außendurchmesser d1, d2 und d3 sind jeweils größer als der Innendurchmesser der Bohrung 12, so dass sich beim Einschrauben der Universalschraube 10 in die Bohrung 12 alle Gewindegänge 20, 22, und 24 in die Wandung 36 der Bohrung 12 einschneiden.

Es läuft nur der erste Gewindegang 20 auf der kegelstumpfartig oder pyramidenstumpfförmig verjüngten Spitze 18, vorzugsweise bis zum freien Ende der Spitze 18, mit gleicher Steigung aus. Dadurch lässt sich die erfindungsgemäße gewindeformende Schraube 10 auch ohne weiteres in einen nicht vorgebohrten Verankerungsgrund, insbesondere aus Holz, einschrauben. Die Schraube 10 zieht sich hierbei problemlos in den Verankerungsgrund ein, ohne dass der zweite und dritte Gewindegang 22, 24 blockieren.

Die Höhe h1 des ersten Gewindegangs 20, gemessen ausgehend von der Oberfläche des im Wesentlichen zylindrischen Schaftes 16, entspricht hierbei im Wesentlichen der Höhe h2 des ersten Gewindegangs 20, gemessen ausgehend von der Oberfläche der Spitze 18.

Die Gewindegänge 22 und 24 bilden eine Art Gewindeband 30, das sich helixförmig über die Länge des Schaftes 16 erstreckt, wobei die Steigung des Gewindebandes 30 mindestens die zweifache, vorzugsweise mindestens die dreifache Bandbreite 32 beträgt.

Die Steigung der Schraube 10 ist der Abstand von einer Windung eines Gewindeganges 20, 22 oder 24 bis zur folgenden Windung desselben Gewindegangs 20, 22 oder 24, also die Summe der Abstände p1, p2 und p3 der Gewindegänge 20, 22, und 24 voneinander.

Die Bandbreite 32 ist entsprechend der Abstand p2 der Gewindegänge 22 und 24.

Die Gewindegänge 20, 22 und 24 sind im Wesentlichen als Spitzgewinde ausgebildet, wobei die Gewindegänge 20, 22 und 24 vorzugsweise den gleichen Flankenwinkel α aufweisen.

### Bezugszeichenliste

- 10: Schraube
- 12: Bohrung
- 14: Schraubenkopf
- 16: Schaft
- 18: Spitze
- 20: 1. Gewindegang
- 22: 2. Gewindegang
- 24: 3. Gewindegang
- 26: Setzrichtung
- 28: Erhöhung
- 30: Gewindeband
- 32: Bandbreite
- 36: Wandung

- d1: 1. Außendurchmesser
- d2: 2. Außendurchmesser
- d3: 3. Außendurchmesser
- d4: 4. Außendurchmesser

- h1: Höhe des 1. Gewindeganges (Schaft)
- h2: Höhe des 1. Gewindeganges (Spitze)

- p1: 1. Abstand
- p2: 2. Abstand
- p3: 3. Abstand

- α: Flankenwinkel

## Patentansprüche

1. Gewindeformende Schraube (10) zum direkten Einschrauben in eine Bohrung (12), die in einem festen Verankerungsgrund eingebracht ist, wobei die Schraube (10) einen Schraubenkopf (14) mit einem Werkzeugangriff, einen im wesentlichen zylindrischen Schaft (16) und vorzugsweise eine kegelstumpfartig oder pyramidenstumpfartig verjüngte Spitze (18) aufweist, wobei die Schraube (10) drei oder mehr, vorzugsweise jedoch drei Gewindegänge (20, 22, 24) aufweist, die parallel zueinander ausgebildet sind und sich helixförmig zumindest teilweise über die Länge des Schaftes (16) erstrecken, wobei wenigstens zwei der Gewindegänge (20, 22, 24) unterschiedliche Außendurchmesser (d1, d2, d3) aufweisen, wobei der Außendurchmesser (d1) eines ersten Gewindeganges (20) größer ist als der Außendurchmesser (d2, d3) des jeweils entgegengesetzt der Setzrichtung (26) dem ersten Gewindegang (20) folgenden zweiten und dritten Gewindeganges (22, 24), **dadurch gekennzeichnet, dass** nur der erste Gewindegang (20) auf der kegelstumpfartig oder pyramidenstumpfförmig verjüngten Spitze (18), vorzugsweise bis zum freien Ende der Spitze (18), mit gleicher Steigung ausläuft.

2. Gewindeformende Schraube (10) nach Anspruch 1, **dadurch gekennzeichnet, dass** der Außendurchmesser (d2) des zweiten Gewindeganges (22) größer ist als der Außendurchmesser (d3) des entgegengesetzt der Setzrichtung (26) dem zweiten Gewindegang (22) folgenden dritten Gewindeganges (24).

3. Gewindeformende Schraube (10) nach Anspruch 1, **dadurch gekennzeichnet, dass** der Außendurchmesser (d2) des zweiten Gewindeganges (22) gleich groß ist wie der Außendurchmesser (d3) des entgegengesetzt der Setzrichtung (26) dem zweiten Gewindegang (22) folgenden dritten Gewindeganges (24).

4. Gewindeformende Schraube (10) nach einem der Ansprüche 1 bis 3, **dadurch gekennzeichnet, dass** der Abstand (p1, p2, p3) wenigstens zweier Gewindegänge (20, 22, 24) zueinander unterschiedlich ist.

5. Gewindeformende Schraube (10) nach einem der Ansprüche 1 bis 4, **dadurch gekennzeichnet, dass** der Abstand (p1) des ersten Gewindeganges (20) zum zweiten Gewindegang (22) größer ist als der Abstand (p2) des zweiten Gewindeganges (22) zum dritten Gewindegang (24) und vorzugsweise auch größer als der Abstand (p3) des dritten Gewindeganges (24) zum ersten Gewindegang (20).

6. Gewindeformende Schraube (10) nach einem der Ansprüche 1 bis 5, **dadurch gekennzeichnet, dass** der Abstand (p2) des zweiten Gewindeganges (22) zum dritten Gewindegang (24) kleiner ist als der Abstand (p3) des dritten Gewindeganges (24) zum ersten Gewindegang (20).

7. Gewindeformende Schraube (10) nach einem der Ansprüche 1 bis 6, **dadurch gekennzeichnet, dass** die Höhe (h1) des ersten Gewindegangs (20), gemessen ausgehend von der Oberfläche des im Wesentlichen zylindrischen Schaftes (16), im Wesentlichen der Höhe (h2) des ersten Gewindegangs (20), gemessen ausgehend von der Oberfläche der Spitze (18), entspricht.

8. Gewindeformende Schraube (10) nach einem der Ansprüche 1 bis 7, **dadurch gekennzeichnet, dass** zwischen dem ersten Gewindegang (20) und dem zweiten Gewindegang (22) eine Erhöhung (28) vorgesehen ist, welche vorzugsweise rechteck- bis halbtrapezförmig ausgebildet ist, wobei sich die Erhöhung (28) parallel und helixförmig zu den Gewindegängen (20, 22, 24) zumindest teilweise über die Länge des Schaftes (16) erstreckt, wobei der Außendurchmesser (d4) der Erhöhung (28) kleiner ist als der Außendurchmesser (d1, d2, d3) der Gewindegänge (20, 22, 24).

9. Gewindeformende Schraube (10) nach einem der Ansprüche 1 bis 8, **dadurch gekennzeichnet, dass** der zweite und der dritte Gewindegang (22, 24) eine Art Gewindeband (30) bilden, das sich helixförmig zumindest teilweise über die Länge des Schaftes (14) erstreckt, wobei die Steigung des Gewindebandes (30) wenigstens eine Bandbreite (32) beträgt.

10. Schraube (10) nach einem der Ansprüche 1 bis 9, **dadurch gekennzeichnet, dass** die Gewindegänge (20, 22, 24) einen im Wesentlichen gleichen Flankenwinkel (α) aufweisen.

11. Schraube (10) nach einem der Ansprüche 1 bis 10, **dadurch gekennzeichnet, dass** die Außendurchmesser (d1, d2, d3) der Gewindegänge (20, 22, 24) derart bemessen sind, dass sich die Gewindegänge (20, 22, 24) beim Einschrauben in die Wandung (36) der Bohrung (12) eingraben und furchen.

## Claims

1. Self-tapping screw (10) for direct screwing into a borehole (12), which is made in a firm anchoring base, wherein the screw (10) has a screw head (14) with a tool engagement, an essentially cylindrical shaft (16) and preferably a tip (18) tapering as a truncated cone or frustum, wherein the screw (10) has three or more, but preferably three screw threads (20, 22, 24), which are formed parallel to each other and extending helically over at least part of the length of the shaft (16), wherein at least two of the screw threads (20, 22, 24) have different outer diameter (d1, d2, d3), wherein the outer diameter (d1) of a first screw thread (20) is larger than the outer diameter (d2, d3) of the second and third screw threads (22, 24) following the first screw thread (20) opposite the setting direction (26), **characterized in that** only the first screw thread (20) on the tapering truncated conical or frustum shaft (18) runs out preferably as far as the free end of the tip (18) with the same pitch.

2. Self-tapping screw (10) according to claim 1, **characterized in that** the outer diameter (d2) of the second screw thread (22) is larger than the outer diameter (d3) of the third screw thread (24) following the second screw thread (22) opposite the setting direction (26).

3. Self-tapping screw (10) according to claim 1, **characterized in that** the outer diameter (d2) of the second screw thread (22) is the same size as the outer diameter (d3) of the third screw thread (24) following the second screw thread (22) opposite the setting direction (26).

4. Self-tapping screw (10) according to one of claims 1 to 3, **characterized in that** the mutual spacing (p1, p2, p3) of at least two screw threads (20, 22, 24) is different.

5. Self-tapping screw (10) according to one of claims 1 to 4, **characterized in that** the distance (p1) between the first screw thread (20) and the second screw thread (22) is greater than the distance (p2) between the second screw thread (22) and the third screw thread (24) and preferably also greater than the distance (p3) between the third screw thread (24) and the first screw thread (20).

6. Self-tapping screw (10) according to one of claims 1 to 5, **characterized in that** the distance (p2) between the second screw thread (22) and the third screw thread (24) is less than the distance (p3) between the third screw thread (24) and the first screw thread (20).

7. Self-tapping screw (10) according to one of claims 1 to 6, **characterized in that** the height (h1) of the first screw thread (20), measured from the surface of the essentially cylindrical shaft (16), essentially corresponds to the height (h2) of the first screw thread (20), measured from the surface of the tip (18).

8. Self-tapping screw (10) according to one of claims 1 to 7, **characterized in that** an elevation (28) is provided between the first screw thread (20) and the second screw thread (22), which is preferably in the shape of a rectangle to a half-trapezoid, and the elevation (28) extends parallel and helically to the screw threads (20, 22, 24) over at least part of the length of the shaft (16), while the outer diameter of the elevation (28) is less than the outer diameter (d1, d2, d3) of the screw threads (20, 22, 24).

9. Self-tapping screw (10) according to one of claims 1 to 8, **characterized in that** the second and the third screw thread (22, 24) form a kind of thread band (30), which extends helically over at least part of the length of the shaft (14), while the pitch of the thread band (30) is at least one width of the band (32).

10. Self-tapping screw (10) according to one of claims 1 to 9, **characterized in that** the screw threads (20, 22, 24) have an essentially identical flank angle (α).

11. Self-tapping screw (10) according to one of claims 1 to 10, **characterized in that** the outer diameters (d1, d2, d3) of the screw threads (20, 22, 24) are dimensioned so that the screw threads (20, 22, 24) dig into and furrow the borehole (12) when screwed into the wall (36).

## Revendications

1. Vis autotaraudeuse (10) conçue pour le vissage direct dans un trou (12) qui est percé dans un fond d'ancrage fixe, cette vis (10) comportant une tête de vis (14) munie d'une attaque d'outil, une tige grosso modo cylindrique (16) et de préférence une pointe effilée de manière tronconique ou pyramidale conique (18), cette vis (10) comportant trois pas de vis ou davantage, mais de préférence trois pas de vis (20, 22, 24) qui sont configurés de manière parallèle les uns par rapport aux autres et qui s'étendent de manière hélicoïdale et au moins partiellement sur la longueur de la tige (16), sachant qu'au moins deux des pas de vis (20, 22, 24) ont des diamètres extérieurs différents (d1, d2, d3) (xxx), et que le diamètre extérieur (d1) d'un premier pas de vis (20) est plus grand que le diamètre extérieur (d2, d3) du deuxième et du troisième pas de vis (22, 24) respectifs dans la direction opposée à la direction de scellement (26) du premier pas de vis, **caractérisée en ce que** seul le premier pas de vis (20) aboutit avec le même pas sur la pointe effilée de manière tronconique ou pyramidale conique (18), et va de préférence jusqu'à l'extrémité libre de la pointe (18).

2. Vis autotaraudeuse (10) selon la revendication 1, **caractérisée en ce que** le diamètre extérieur (d2) du deuxième pas de vis (22) est plus grand que le diamètre extérieur (d3) du troisième pas de vis (24) qui suit le deuxième pas de vis (22) dans la direction opposée à la direction de scellement (26).

3. Vis autotaraudeuse (10) selon la revendication 1, **caractérisée en ce que** le diamètre extérieur (82) du deuxième pas de vis (22) est aussi grand que le diamètre extérieur (d3) du troisième pas de vis (24) qui suit le deuxième pas de vis (22) dans la direction opposée à la direction de scellement (26).

4. Vis autotaraudeuse (10) selon l'une des revendications 1 à 3, **caractérisée en ce que** la distance (p1, p2, p3) les uns par rapport aux autres diffère d'au moins deux pas de vis (20, 22,24).

5. Vis autotaraudeuse (10) selon l'une des revendications 1 à 4, **caractérisée en ce que** la distance (10) entre le premier pas de vis (20) et le deuxième pas de vis (22) est plus grande que la distance (p2) entre le deuxième pas de vis (22) et le troisième pas de vis (24), et de préférence plus grande que la distance (p3) entre le troisième pas de vis (24) et le premier pas de vis (20).

6. Vis autotaraudeuse (10) selon l'une des revendications 1 à 5, **caractérisée en ce que** la distance (p2) entre le deuxième pas de vis (22) et le troisième pas de vis (24) est inférieure à la distance (p3) entre le troisième pas de vis (24) et le premier pas de vis (20).

7. Vis autotaraudeuse (10) selon l'une des revendications 1 à 6, **caractérisée en ce que** la hauteur (h1) du premier pas de vis (20), mesurée à partir de la surface de la tige grosso modo cylindrique (16) correspond pour l'essentiel à la hauteur (h2) du premier pas de vis (20), mesurée à partir de la surface de la pointe (18).

8. Vis autotaraudeuse (10) selon l'une des revendications 1 à 7, **caractérisée en ce qu'**entre le premier pas de vis (20) et le deuxième pas de vis (22), une élévation (28) est prévue, qui a une forme de préférence rectangulaire à semi-trapézoïdale, sachant que cette élévation (28) s'étend parallèlement et hélicoïdalement par rapport aux pas de vis (20, 22, 24) et au moins parallèlement sur la longueur de la tige (16), tandis que le diamètre extérieur (d4) de l'élévation (28) est plus petit que le diamètre extérieur (d1, d2, d3) des pas de vis (20, 22, 24).

9. Vis autotaraudeuse (10) selon l'une des revendications 1 à 8, **caractérisée en ce que** le deuxième et le troisième pas de vis (22, 24) constituent une espèce de ruban de filetage (30) qui s'étend hélicoïdalement et au moins partiellement sur la longueur de la tige (14), sachant que le pas du ruban de filetage (30) correspond à au moins une largeur de bande (32).

10. Vis (10) selon l'une des revendications 1 à 9, **caractérisée en ce que** les pas de vis (20, 22, 24) un angle de flanc (a) grosso modo identique.

11. Vis (10) selon l'une des revendications 1 à 10, **caractérisée en ce que** le diamètre extérieur (d1, d2, d3) des pas de vis (20,22, 24) est dimensionné de telle façon que ces pas de vis (2b, 22, 24) s'enfoncent par rainurage dans la paroi (36) du trou (12).
